# EUROPEAN PATENT APPLICATION

(11) **EP 4 163 252 A1**
(43) Date of publication of application: **12.04.2023**
(21) Application number: 21201296.7
(22) Date of filing: 06.10.2021
(51) Int. Cl.: C01B 15/013, C01B 15/01, B01D 61/02, B01D 15/00

(54) **METHOD FOR PURIFYING AN AQUEOUS HYDROGEN PEROXIDE SOLUTION**

(71) Applicant: Solvay SA, 1120 Brussels (BE)
(72) Inventor: BOSSE, Jürgen, 31535 NEUSTADT AM RBGE (DE); DABRUNZ, Matthias, 06406 Bernburg (DE); MÖHLMANN, Lennart, 06406 BERNBURG (DE); ROST, Josephine, 06406 BERNBURG (DE)
(74) Representative: Valentino, Cédric

(57) **Abstract**

The invention relates to a process for the purification of an aqueous hydrogen peroxide solution comprising at least the following steps:
(a) the treatment of an aqueous hydrogen peroxide solution with at least one first reverse osmosis system,
(b) the treatment of the obtained hydrogen peroxide solution with at least one first stabilizer,
(c) the treatment of the obtained hydrogen peroxide solution with at least one purification mean selected from adsorption resins, ion exchange resins, and combinations thereof.

The invention also relates to the aqueous hydrogen peroxide solution obtainable thereby, and to the use thereof in the manufacture of microelectronic components and semiconductors.

## Description

### TECHNICAL FIELD

The present invention relates to a process for purifying an aqueous hydrogen peroxide solution, to the aqueous hydrogen peroxide solution obtainable by such a process and to the use thereof in the manufacture of microelectronic components and semiconductors.

### BACKGROUND ART

Aqueous hydrogen peroxide solutions are generally prepared by the autoxidation technique. Typically, an alkyl substituted anthraquinone is subjected cyclically to reduction with hydrogen, oxidation in air and extraction of hydrogen peroxide with water. Many variations of this manufacturing technique are known. After formation, the aqueous hydrogen peroxide can be purified to some extent by distillation techniques and stabilized by addition of various stabilizers. Although the manufacturing techniques differ markedly in their operation they share the common result that a solution of hydrogen peroxide so formed contains significant amounts of residual impurities, ionic and non-ionic. Typical cationic impurities include (but not limited to) iron, aluminum, sodium, calcium, zinc, magnesium and nickel. Typical anionic impurities include nitrate, phosphate, and pyrophosphate. In addition the nature of the autoxidation process is such that the resulting hydrogen peroxide solution contains significant organic impurities typically at concentrations above 50 mg/kg and occasionally as high as 600 mg/kg.

Aqueous hydrogen peroxide is an important raw material for the semiconductor and microelectronics industries. It is used in many of the processing steps that result in the finished semiconductor or component. The industry demands a high level of purity from the hydrogen peroxide solutions. Cationic and anionic contamination of the semiconductor process result in lowered production yields and therefore higher costs. In addition it is known that trace levels of organic contamination can influence the semiconductor production processes. Thus the contaminant levels present in aqueous hydrogen peroxide produced from the autoxidation process are unacceptably high and further purification is required to produce a semiconductor grade material. It is however particularly difficult to reduce TOC levels below 1 mg/kg in aqueous hydrogen peroxide solutions, especially with hydrogen peroxide produced by the autoxidation process.

Over years, reverse osmosis has become a prevailing technology to purify hydrogen peroxide solutions intended to be used in electronic applications.

WO 2005/033005 especially discloses a purification process in which an aqueous solution of hydrogen peroxide, initially containing 65 ppm of TOC (total organic carbon), is purified by passing through a reverse osmosis membrane, an adsorption resin column, a cation exchange resin and an anion exchange resin, so that the TOC value is decreased to 0.49 ppm.

However, reverse-osmosis-based purification processes fail delivering aqueous hydrogen peroxide of very high purity over time: it was especially observed that a pick-up of metal components (mainly iron) appears in the hydrogen peroxide solution permeate leaving the reverse osmosis membrane. It was found out that the metal impurities come from the reverse osmosis system itself, which is usually partially made of stainless steel.

It is today not easily possible to suppress this impurities generation by using a reverse osmosis system made of a different material because a reverse osmosis system requires a high working pressure and stainless steel is particularly hydrogen peroxide resistant, at such pressures.

The presence of these newly generated metal impurities is nevertheless an important issue: they degrades hydrogen peroxide, forming highly reactive radical species, they reduce the lifespan of the subsequent purification means potentially involved in the purification process, thereby generating undesirable contaminants in the final purification steps and most of all the presence of such metal impurities implies a safety risk.

The present invention now provides a new method for purifying an aqueous hydrogen peroxide solution which provides a highly pure aqueous hydrogen peroxide solution, suitable for usage in electronic applications, especially one having a TOC level below 1 mg/kg, and/or a TN (total nitrogen) level below 0.05 mg/kg (50 ppb) while avoiding the above mentioned drawbacks.

### BRIEF DESCRIPTION OF THE INVENTION

One subject matter of the invention is a process for the purification of an aqueous hydrogen peroxide solution comprising at least the following steps:
(a) the treatment of an aqueous hydrogen peroxide solution with at least one first reverse osmosis system,
(b) the treatment of the obtained hydrogen peroxide solution with at least one first stabilizer,
(c) the treatment of the obtained hydrogen peroxide solution with at least one adsorption resin,
(d) optionaly, the treatment of the obtained hydrogen peroxide solution with at least one ion exchange resin.

The invention also relates to an aqueous hydrogen peroxide solution obtained or obtainable by the process according to the invention containing less than 1 mg/kg of Total Organic Carbon (TOC), a Total Nitrogen (TN) of less than 0.05 mg/kg and containing less than 0.00001 mg/kg of iron. The iron quantity in some embodiments wherein step (d) is performed is less than 0.000001 mg/kg of aqueous hydrogen peroxide solution.

The invention finally relates to the use of such an aqueous hydrogen peroxide solution in the manufacture of microelectronic components and semiconductors.

The process according to the invention has one or more of the following advantages:
- it enables to preserve the lifespan of the purification mean(s) downstream from the reverse osmosis system;
- it improves the safety of the purification process;
- it enables to deliver a hydrogen peroxide solution of high purity, in particular a hydrogen peroxide solution having a very low level of TOC, TN and of iron;
- Monitoring the TN level has been found to be advantageous to ensure the stability of hydrogen peroxide quality and manufacture.
- it provides a hydrogen peroxide solution that is substantially free of stabilizers. The aqueous hydrogen peroxide solution of the invention advantageously exhibits a maximum phosphorus content expressed as PO₄³⁻ of below _{[ML5]} 0.001 mg/kg, and/or a dry residue at 105 °C of at most 1 mg/kg.

Such specifications make it particularly suited for usage in electronic applications.

### DESCRIPTION OF THE INVENTION

In the present disclosure, the expression "comprised between ... and ..." should be understood as including the limits.

The invention first relates to a process for the purification of an aqueous hydrogen peroxide solution comprising at least the following steps:
(a) the treatment of an aqueous hydrogen peroxide solution with at least one first reverse osmosis system,
(b) the treatment of the obtained hydrogen peroxide solution with at least one first stabilizer,
(c) the treatment of the obtained hydrogen peroxide solution with at least one adsorption resin,
(d) optionally, the treatment of the obtained hydrogen peroxide solution with at least one ion exchange resin.

The aqueous hydrogen peroxide solution used as a starting material in the process of the invention may be an industrial or a commercial grade. It is especially possible to treat hydrogen peroxide produced by the autoxidation process or by direct synthesis from oxygen and hydrogen. The process of the invention is especially useful for treating a hydrogen peroxide solution prepared by the autoxidation process. In this case, the hydrogen peroxide solution is preferably subjected to a distillation treatment before being subjected to the process of the invention. The hydrogen peroxide solution used in the process of the invention can also contain stabilizers and/or additives such as nitrates, phosphates, pyrophosphates, phosphoric acid, nitric acid or any combination thereof. If necessary, the hydrogen peroxide solution may be diluted or concentrated before undergoing the purification process. The concentration of the initial aqueous hydrogen peroxide solution may range for example from 5 to 70 wt%, in particular from 30 to 70 wt%, more particularly from 50 to 70 wt%, being for example of about 60 wt%.

The process according to the present invention involves the use of a reverse osmosis system in step (a) called thereafter first reverse osmosis system. The first reverse osmosis system comprises at least one reverse osmosis membrane. It may comprise several reverse osmosis membranes arranged in parallel or in series. According to one embodiment, the first reverse osmosis system comprises at least two parallel reverse osmosis membranes. The membrane(s) used to carry out the reverse osmosis can be made, for example, of polyamide, polypiperazinamide, polyacrylonitrile and/or polysulfone.

The reverse osmosis system generally comprises a housing made of stainless steel. Stainless steel is today a material of choice as it can withstand the high pressure applied to the system, which is required for the reverse osmosis to work properly. Accordingly, the first reverse osmosis system may comprise stainless steel. The pressure applied to the first reverse osmosis system may suitably range from 10 to 50 bar, in particular from 20 to 40 bar. The flow rate of the aqueous hydrogen peroxide solution feeding the first reverse osmosis system may range from 0.1 to 5 m³/h, in particular from 0.4 to 1 m³/h. The temperature of the aqueous hydrogen peroxide solution feeding the first reverse osmosis system may range for example from 0 to 25°C.

The process of the invention comprises a subsequent treatment step (b) wherein the obtained hydrogen peroxide solution (the permeate) is further treated with at least one stabilizer (called thereafter first stabilizer). The treatment step (b) is advantageous to inhibit hydrogen peroxide degradation and to allow the removal of metal impurities, in particular iron present in the hydrogen peroxide solution by said at least one adsorption resin located downstream in the process. Without step (b), metal impurities, in particular iron would not be sufficiently retained by the adsorption resin and could then deteriorate the possible other purification equipments located after the adsorption resin; in particular when an anionic exchange resin is present after the adsorption resin, the loading of metal impurities, in particular iron thereon would provoke instability and thus safety issues and reduce the lifespan thereof. Moreover the stability of TOC in the final product can be ensured and the amount of TN can be controlled at a desirably low level. It is noted that the skilled person has an aversion against adding supplementary materials into a purification process targeting ultrapure hydrogen peroxide solutions because there is concern that additional materials will lead to contamination by themselves. It has been found, unexpectedly, that the benefits of the treatment with a stabilizer in accordance with the process of the invention outweigh any such concern.

The first stabilizer may be especially selected from phosphates, pyrophosphates, phosphoric acid and combinations thereof, more particularly from pyrophosphates and even more particularly from pyrophosphoric acids. The amount of stabilizer to be used to get the targeted stabilizing effect can be adjusted depending on the nature of the stabilizer and the amount of metal impurities detected upstream, in the permeate aqueous hydrogen peroxide flow. For example, the amount of first stabilizer added to the aqueous hydrogen peroxide solution may range from 0.1 to 1 mg/kg. Any suitable technical means can be used to perform the treatment. The stabilizer can be manually or automatically added to the flow of aqueous hydrogen peroxide. A dosing pump system may be used in that respect.

After step (b) and before step (c), an optional treatment step (b') may be performed, wherein the hydrogen peroxide solution obtained from step (b) is further treated with at least one reverse osmosis system, called thereafter second reverse osmosis system. This additional treatment step (b') is advantageous to increase the purity of the final aqueous hydrogen peroxide solution produced according to the process of the invention, which is particularly convenient for demanding electronic applications. It is to be noted that the upstream treatment step (b) is also advantageous to avoid an oxidative decomposition of the second reverse osmosis system of step (b') via metal-catalyzed reactions such as the Fenton reaction, and thereby improves the lifespan of the second reverse osmosis system. The second reverse osmosis system comprises at least one reverse osmosis membrane. It may comprise several reverse osmosis membranes arranged in parallel or in series. According to one embodiment, the second reverse osmosis system comprises only one reverse osmosis membrane. The membrane(s) used to carry out the reverse osmosis can be made of polyamide, polypiperazinamide, polyacrylonitrile and/or polysulphone. As for the first reverse osmosis system, the second reverse osmosis system may comprise stainless steel. Consequently, the first and/or the at least one second reverse osmosis system can comprise stainless steel.

Pressure applied to the second reverse osmosis system may suitably range from 10 to 50 bar, in particular from 20 to 40 bar. The flow rate of the aqueous hydrogen peroxide solution feeding the second reverse osmosis system may range from 0.1 to 5 m³/h, in particular from 0.5 to 1.3 m³/h. The temperature of the aqueous hydrogen peroxide solution feeding the second reverse osmosis system may range for example from 0 to 25°C.

After step (b') and before step (c), an optional treatment step (b") may be performed, wherein the hydrogen peroxide solution obtained from step (b') is further treated with at least one stabilizer, called thereafter second stabilizer. The second stabilizer may be the same as or different from the first stabilizer. The second stabilizer is preferably the same as the first stabilizer. Therefore, the second stabilizer may be especially selected from phosphates, pyrophosphates, phosphoric acid and combinations thereof. Depending on the amount of metal impurities upstream and the nature of the stabilizer, the skilled person knows which amount is to be used to get the targeted stabilizing effect. For example, the amount of second stabilizer added to the aqueous hydrogen peroxide solution may range from 0.1 to 1 mg/kg of hydrogen peroxide solution. Any suitable technical mean can be used to perform the treatment. The stabilizer can be manually or automatically added to the flow of aqueous hydrogen peroxide. A dosing pump system may be used in that respect.

The resulting aqueous hydrogen peroxide solution is a stabilized hydrogen peroxide solution. In other words, it contains a certain amount of stabilizer therein. When the stabilizer(s) added is/are phosphate-based stabilizer(s), the aqueous hydrogen peroxide solution may especially exhibit at this stage of the purification process a minimum phosphorus content expressed as PO₄³⁻ of 0.1 mg/kg. Phosphate-based stabilizers are particularly suited to complex metal impurities and in particular iron, which are likely to be released by the reverse osmosis system(s) upstream. However, the final aqueous hydrogen peroxide solution to be delivered at the end of the purification process of the invention has to be substantially free of impurities and of stabilizer as well, to be usable in electronic applications.

The process of the invention thus comprises a treatment step (c) wherein the obtained hydrogen peroxide solution is treated with at least one adsorption resin.

It is recommended to use an adsorption resin with a surface as high as possible. The purpose is to adsorb contaminants present in the hydrogen peroxide solution on the surface of the resin which is in contact with the hydrogen peroxide solution, so that the hydrogen peroxide solution leaving the contact equipment no longer contains the adsorbed contaminants. A suitable equipment can for instance be a column packed with a bed of adsorption resin particles. The adsorption resins can be chosen from any polymeric product, for example based on a styrene divinyl benzene copolymer. The adsorption resin AMBERLITE^{®} XAD4 commercialized by the company Dupont gives good results. The time during which the hydrogen peroxide solution is contacted with the adsorption resin is generally at least 10 minutes, in particular at least 40 minutes. It is in many cases at most 60 minutes, especially at most 50 minutes. The contact with the adsorption resin is usually carried out at a temperature from 0 to 25 °C, in particular from 5 to 20 °C, temperatures of about 15 °C being convenient.

The process of the invention may comprise a further treatment step (d) wherein the obtained hydrogen peroxide solution is treated with at least one ion exchange resin.

When an ion exchange resin is used in the process of the invention, the ionic impurities present in the hydrogen peroxide solution are replaced by the counterion such as H⁺ or HCO₃⁻present in the resin. Suitable equipment can for instance be a column packed with a bed of ion exchange resin particles, or same resins held within a matrix to form a membrane. The ion exchange resin can be chosen from a variety of types. Depending on the impurities to be removed, it may be selected from cation exchange resins, anion exchange resins or combinations thereof.

A cation exchange resin can be chosen from any polymeric product capable of reversibly binding cations. The cation exchange resin can for example be based on polystyrene and divinylbenzene copolymer. For an optimal removal of cationic components like sodium, calcium, a cation exchange resin of polystyrene and divinylbenzene copolymer type having sulfuric acid groups is particularly suitable. The cation exchange resin AmberSep (^{™}) 200 commercialized by the company Dupont gives good results.

The time during which the hydrogen peroxide solution is contacted with the cation exchange resin may range from 10 to 60 minutes, in particular from 15 to 30 minutes. The contact with the ion exchange resin is usually carried out at a temperature from 0 to 25°C, in particular from 0 to 15°C, a temperature of about 5°C being convenient.

An anion exchange resin can be chosen from any polymeric product, in particular capable of reversibly binding anions. It can for example be based on polystyrene and divinylbenzene copolymer. Preferably, anionic resins may be used which include quaternary ammonium cationic groups. For an optimal removal of anionic TOC components an anion exchange resin in the bicarbonate form is particularly suitable and for safety reasons.

The time during which the hydrogen peroxide solution is contacted with the anion exchange resin may range from 1 to 60 minutes, in particular from 3 to 20 minutes. The contact with the anionic resin is usually carried out at a temperature from 0 to 25°C, in particular from 0 to 10°C, a temperatures of about 5°C being convenient.

According to one embodiment, optional step (d) consists in the treatment by at least one cationic exchange resin followed by at least one anionic exchange resin followed by at least one cationic exchange resin. This sequence is advantageous as the first cationic exchange resin is suitable to capture part of the iron and most of the cationic impurities. As the anionic resin may leach cationic impurities, the presence thereafter of a second cationic resin is advantageous.

In another embodiment, the first and/or the at least one second reverse osmosis system, and or the adsorption resin and/or optionally the ion exchange resin comprises a nitrogen containing polymer. More particularly, the anionic exchange resin may comprise a nitrogen containing polymer. In that case, the process according to the invention is particularly efficient to prevent degradation of the resin and undesirable nitrogen content in the final product, as well as safety concerns.

The process of the invention can also contain at least one dilution step. In such a step, water, preferably ultrapure water, is added to the aqueous hydrogen peroxide solution in order to decrease its concentration in hydrogen peroxide. Usually, the concentration in hydrogen peroxide is lowered down to values between 30 to 40 % by weight, for instance to a value of about 31 % by weight. The dilution step may be performed at any stage of the process, but it may be in particular done after step (b) or (b') or (b") and preferably before performing step (c).

The process of the invention enables the production of an aqueous hydrogen peroxide solution of very high purity. The invention thus relates to an aqueous hydrogen peroxide solution obtained or obtainable by the process according to the invention, especially containing less than 1 mg/kg of Total Organic Carbon (TOC), less than 0.05 mg/kg Total Nitrogen (TN) and preferably containing less than 0.000001 mg/kg of iron. The TOC is measured by catalytic oxidation of the organic species in combination with detection by non-dispersive infra-red spectroscopy. The Total Nitrogen (TN) can be measured, for example, by Shimadzu TOC-L TOC/TN analyzer. The iron is measured by Inductively coupled plasma mass spectrometry (ICP-MS).

Advantageously, the aqueous hydrogen peroxide solution of the invention is substantially free of stabilizer. In particular, the aqueous hydrogen peroxide solution of the invention advantageously exhibits a phosphorus content expressed as PO₄³⁻ of below 0.001 mg/kg, as it can be measured by Ion Chromatography.

In a preferred aspect, the aqueous hydrogen peroxide solution of the invention exhibits a nitrogen content expressed as TN of below 0.05 mg/kg. This can be measured by Shimadzu TOC-L TOC/TN analyzer or similar .

The aqueous hydrogen peroxide solution of the invention has generally a dry residue at 105 °C of below 1 mg/kg . The dry residue can be determined by weighing after full evaporation of the volatile components.

The aqueous hydrogen peroxide solution may especially exhibit, for example for a H₂O₂ concentration at 31 wt%, the following impurities profile:

### Trace metals:

A1 < 0,000001 mg/kg
Cr < 0,000001 mg/kg
Fe < 0,000001 mg/kg
Ni < 0,000001 mg/kg
Cl < 0,002 mg/kg
SO₄²⁻ < 0,002 mg/kg
P as PO₄³⁻ < 0.001 mg/kg
TOC: < 1 mg/kg
Dry residue : < 1 mg/kg
TN: < 0,05 mg/kg

The invention finally relates to the use of the aqueous hydrogen peroxide solution of the invention in the manufacture of microelectronic components and semiconductors. It also relates to a process for the manufacture of a microelectronic component or a semiconductor comprising the use of the aqueous hydrogen peroxide solution of the invention. Typically, the hydrogen peroxide can be used in the manufacture of semiconductor chips and of printed circuit boards. In the semiconductor manufacture it is frequently used for cleaning and etching steps in which it is often applied with other chemicals such as mineral acids.

Should the disclosure of any patents, patent applications, and publications which are incorporated herein by reference conflict with the description of the present application to the extent that it may render a term unclear, the present description shall take precedence.

The invention will now be further described in examples without intending to limit it.

### EXAMPLES

### Example 1 - Purification of H2O2

The analyses of the materials was carried out using the methods described in the description above.
- Membrane Purification: An aqueous solution of hydrogen peroxide having a concentration of60% by weight was passed through a polyamide reverse osmosis membrane. At a feed pressure of 28 barg and a temperature of 5 °C. The TOC value of the feed was 110 mg/kg. The resulting permeate was diluted to a concentration of 31% using ultrapure water (having a TOC level of less than 0.005 mg/kg). Stabilizer SAPP (0.5 mg/kg) was added and the solution was homogenized and analyzed.
- Adsorption Resin: The stabilized aqueous hydrogen peroxide solution produced above was passed through a column of AMBERLITE^{®} XAD4 adsorption resin with a flow of 2.5 BV/h at a temperature of 20°C.
- Ion Exchange: The resulting aqueous hydrogen peroxide solution was consecutively passed through a cation exchange resin with a flow of 10 BV/h and an anion exchange resin in bicarbonate form at a 20 °C. The resulting hydrogen peroxide solution had a TOC level of 0.6 mg/kg, a PO4 concentration below DL and a TN concentration below 0.05 mg/kg

### Counter example 1

- Membrane Purification: An aqueous solution of hydrogen peroxide having a concentration of 60% by weight was passed through a polyamide reverse osmosis membrane. At a feed pressure of 28 barg and a temperature of 5 °C. The TC value of the feed was 110 mg/kg. The resulting permeate was diluted to a concentration of 31% using ultrapure water (having a TOC level of less than 0.005 mg/kg).
- Adsorption Resin: The aqueous hydrogen peroxide solution produced above was passed through a column of AMBERLITE^{®} XAD4 adsorption resin with a flow of 2.5 BV/h at a temperature of 20 °C.
- Ion Exchange: The resulting aqueous hydrogen peroxide solution was consecutively passed through a cation exchange resin with a flow of 10 BV/h and an anion exchange resin in bicarbonate form at a temperature of 20 °C. The resulting hydrogen peroxide solution had a TOC level of 0.6 mg/kg, a PO4 concentration below DL, a TN concentration of 0.065 mg/kg.

### Example 2

The purification of H2O2 was carried out in a substantially similar way than in example 1 and the iron content after the membrane purification was determined to be below 0,001 mg/kg and after the adsorption step the iron content was below 0,000005 mg/kg. After the ion exchange step iron content was below 0,000001 mg/kg. The PO4, TN and TOC values after the ion exchange step were similar to example 1.

## Claims

1. Process for the purification of an aqueous hydrogen peroxide solution comprising at least the following steps:
(a) the treatment of an aqueous hydrogen peroxide solution with at least one first reverse osmosis system,
(b) the treatment of the obtained hydrogen peroxide solution with at least one first stabilizer,
(c) the treatment of the obtained hydrogen peroxide solution with at least one adsorption resin.

2. Process according to Claim 1, comprising a further step (d) wherein the obtained hydrogen peroxide solution is treated with at least one ion exchange resin.

3. Process according to Claim 2 wherein step (d) consists in the treatment of the obtained hydrogen peroxide solution with a cationic exchange resin followed by an anionic exchange resin followed by a cationic exchange resin.

4. Process according to any one of Claims 1 to 3 wherein the first reverse osmosis system comprises at least two parallel reverse osmosis membranes.

5. Process according to any one of Claims 1 to 4, wherein the at least one first stabilizer is selected from phosphates, pyrophosphates, phosphoric acid and combinations thereof.

6. Process according to any one of Claims 1 to 5, comprising after step (b) and before step (c) a treatment step (b') wherein the hydrogen peroxide solution obtained from step (b) is further treated with at least one second reverse osmosis system.t

7. Process according to Claim 6, comprising after step (b') and before (c) a treatment step (b") wherein the hydrogen peroxide solution obtained from step (b') is further treated with at least one second stabilizer.

8. Process according to Claim 7, wherein the at least one second stabilizer is selected from phosphates, pyrophosphates, phosphoric acid and combinations thereof, being preferably the same as the at least one first stabilizer.

9. Process according to anyone of claims 1 to 8, wherein the first and/or the at least one second reverse osmosis system comprises stainless steel.

10. Process according to anyone of claims 1 to 9, wherein the first and/or the at least one second reverse osmosis system, and or the adsorption resin and/or optionally the ion exchange resin, more particularly the anionic exchange resin comprises a nitrogen containing polymer.

11. Aqueous hydrogen peroxide solution containing less than 1 mg of Total Organic Carbon (TOC) per kg of aqueous hydrogen peroxide solution and exhibiting a total nitrogen content (TN) of below 0.05 mg/kg.

12. Aqueous hydrogen peroxide solution according to claim 11, exhibiting a phosphorus content expressed as PO₄³- of below 0.001 mg/kg.

13. Aqueous hydrogen peroxide solution according to claim 11 or 12, containing less than 0.000001 mg of iron per kg of aqueous hydrogen peroxide solution.

14. Aqueous hydrogen peroxide solution according to anyone of claims 11 to 13, exhibiting a dry residue at 105 °C of at most 1 mg/kg.

15. Process for the manufacture of a microelectronic component or a semiconductors comprising the use of the aqueous hydrogen peroxide solution manufactured by the process of any of claims 1 to 10 or according to any of claims 11 to 14.
